# EUROPÄISCHE PATENTSCHRIFT

(11) **EP 3 352 950 B1**
(45) Veröffentlichungstag und Bekanntmachung des Hinweises auf die Patenterteilung: **06.11.2019**
(21) Anmeldenummer: 16794932.0
(22) Anmeldetag: 22.09.2016
(51) Int. Cl.: B25J 9/00

(54) **INDUSTRIEROBOTER**
INDUSTRIAL ROBOT
ROBOT INDUSTRIEL

(30) Priorität: 24.09.2015 DE 102015218429
(43) Veröffentlichungstag der Anmeldung: 01.08.2018
(73) Patentinhaber: autonox robotics GmbH, 77694 Kehl (DE)
(72) Erfinder: Ilch, Hartmut, 77694 Kehl (DE)
(74) Vertreter: Geitz Truckenmüller Lucht Christ
(86) Internationale Anmeldenummer: PCT/DE2016/100443
(87) Internationale Veröffentlichungsnummer: WO 2017/050319

(56) Entgegenhaltungen:
- EP-A1- 1 293 691
- EP-B1- 2 461 948
- JP-A- H0 947 995

## Beschreibung

Die Erfindung geht aus von einem Industrieroboter mit Parallelkinematik, welcher mit einer Roboterbasis, mit einem als Aufnahme für einen Greifer oder ein Werkzeug dienenden Trägerelement und mit mehreren Betätigungseinheiten zum Bewegen des Trägerelements ausgestattet ist.

Derartige Industrieroboter mit Parallelkinematik dienen zum Bewegen, Positionieren und/ oder Bearbeiten eines Gegenstands im Raum. Sie sind mit einer ortsfest angeordneten Roboterbasis und einem beweglichen Trägerelement zur Aufnahme eines Greifers, eines Werkzeugs oder eines sonstigen Maschinenelements ausgestattet. Mindestens zwei Betätigungseinheiten sind mit einem Ende mit der Roboterbasis und mit dem anderen Ende mit dem Trägerelement verbunden. Jede Betätigungseinheit wird über einen ihr zugeordneten und an der Roboterbasis angeordneten Antrieb bewegt. Diese Antriebe der Betätigungseinheiten werden als Betätigungseinheit-Antriebe bezeichnet. Eine Bewegung der Betätigungseinheiten führt zu einer Bewegung des Trägerelements. An dem Trägerelement kann beispielsweise ein Greifer zum Aufnehmen eines Gegenstands oder ein Werkzeug zum Bearbeiten eines Gegenstands oder ein Maschinenelement, wie beispielsweise ein Lager oder ein Getriebe angeordnet sein. Das Trägerelement ist hierzu mit einer Aufnahme für einen Greifer, ein Werkzeug oder ein Maschinenelement ausgestattet. Durch die aufeinander abgestimmte Bewegung der angetriebenen Betätigungseinheiten kann der an dem Trägerelement angeordnete Greifer, das Werkzeug oder das Maschinenelement gezielt in mehreren Dimensionen im Raum bewegt werden. Die Betätigungseinheiten bewirken eine räumliche Parallelogrammführung des Trägerelements. Die daraus resultierende parallele Kinematik ermöglicht eine schnelle und präzise Bewegung des Trägerelements und des daran angeordneten Greifers, Werkzeugs oder Maschinenelements. Diese Bewegung ist eine translatorische Bewegung des Trägerelements. Ist der Industrieroboter mit drei Betätigungseinheiten ausgestattet, handelt es sich um eine translatorische Bewegung in drei Raumrichtungen. Die Bewegung hat drei Freiheitsgrade und kann in einem Koordinatensystem mit x-, y- und z-Achse beschrieben werden. Ist der Industrieroboter mit zwei Betätigungseinheiten ausgestattet, handelt es um eine translatorische Bewegung in zwei Raumrichtungen. In diesem Fall hat die Bewegung zwei Freiheitsgrade und kann in einem Koordinatensystem mit x- und z-Achse beschrieben werden.

Zusätzlich zu dieser translatorischen Bewegung des Trägerelements kann durch einen weiteren Antrieb an der Roboterbasis ein Drehmoment erzeugt und auf einen an dem Trägerelement angeordneten Greifer, ein Werkzeug oder ein Maschinenelement übertragen werden. Zur Übertragung eines Drehmoments von einem an der Roboterbasis angeordneten Rotationsantrieb auf einen an dem Trägerelement angeordneten Greifer, ein Werkzeug oder ein Maschinenelement kann ein Teleskop dienen, das an beiden Enden mit einem Gelenk mit mehreren Freiheitsgraden ausgestattet ist. Die Gelenke müssen dabei derart ausgebildet sein, dass sie eine Drehmoment übertragen können. Ein derartiges Gelenk mit mehreren Freiheitsgraden ist beispielsweise ein Kardangelenk, ein Kreuzgelenk, ein Gleichlaufgelenk oder ein homokinetisches Gelenk. Dabei ist das Teleskop über ein erstes Gelenk mit mehreren Freiheitsgraden an der Roboterbasis beweglich aufgenommen und über ein zweites Gelenk mit mehreren Freiheitsgraden an dem Trägerelement. Das Teleskop ist in diesem Fall als Teleskopachse ausgebildet. Es kann auch als Teleskopgelenkwelle bezeichnet werden. Durch den Rotationsantrieb und die Teleskopachse wird ein weiterer Freiheitsgrad des Industrieroboters erzeugt. Diese Rotationsbewegung dient nicht der Positionierung des Greifers, Werkzeugs oder Maschinenelements im Raum sondern auch der Betätigung des Greifers, Werkzeugs oder Maschinenelements selbst, beispielsweise dem Öffnen und Schließen des Greifers oder dem Drehen des Werkzeugs oder Maschinenelements. Ist der Industrieroboter mit drei Betätigungseinheiten ausgestattet, wird die Teleskopachse, welche das Drehmoment von dem Antrieb auf einen Greifer, ein Werkzeug oder Maschinenelement an dem Trägerelement überträgt, als vierte Achse bezeichnet.

Zu derartigen Robotern zählen beispielsweise Deltaroboter, wie aus der EP 0 250 470 A1 bekannt. Diese sind mit mindestens zwei Betätigungseinheiten als Steuerarmen ausgestattet. Die Betätigungs- oder Steuerarme weisen einen oberen und einen unteren Armabschnitt auf, welche beweglich miteinander verbunden sind. Jeder der oberen Armabschnitte wird durch einen Betätigungsarm-Antrieb, beispielsweise eine Motor-Getriebe-Einheit, angetrieben. Der Betätigungsarm-Antrieb erzeugt beispielsweise ein Drehmoment, das über das Getriebe auf den zugehörigen oberen Armabschnitt übertragen wird. Die Antriebe sind an der Roboterbasis angeordnet. Die Bewegung der oberen Armabschnitte wird über die unteren Armabschnitte auf das Trägerelement übertragen. Jeder untere Armabschnitt weist zwei parallele, in Längsrichtung des Armabschnitts verlaufende Stangen oder Streben auf, die an ihrem einen Ende beweglich mit dem zugehörigen oberen Armabschnitt und mit ihrem anderen Ende beweglich mit dem Trägerelement verbunden sind.

Die Betätigungsarm-Antriebe können statt dessen auch eine lineare Antriebskraft erzeugen, durch die ein zugehöriger Armabschnitt entlang einer zugehörigen linearen Bewegungsachse in einer vorgegebenen Bewegungsrichtung bewegt wird. Parallelkinematische Roboter mit Linearantrieben werden als lineare Deltaroboter bezeichnet.

Neben Deltarobotern zählen auch Seilroboter zu Industrierobotern mit Parallelkinematik. Seilroboter sind mit Seilen als Betätigungseinheiten ausgestattet. Mit seinem einen Ende ist jedes Seil mit einem Antrieb verbunden. Die Antriebe sind als Rotations- oder Linearantriebe ausgebildet, welche die freie Länge der Seile durch Auf- und Abwickeln auf eine mit einem Seilende verbundene Welle oder durch Vor- und Zurückschieben einer mit einem Seilende verbundenen Schubstange vorgeben. An ihrem dem Antrieb abgewandten Ende sind die Seile mit einem Trägerelement für einen Greifer oder ein Werkzeug verbunden. Dabei ist dafür Sorge zu tragen, dass die Seile gespannt sind. Durch die aufeinander abgestimmte Bewegung der Antriebe kann der an dem Trägerelement angeordnete Greifer oder das Werkzeug gezielt in mehreren Dimensionen bewegt werden.

Ein an dem Trägerelement angeordneter Greifer, ein Werkzeug oder ein Maschinenelement kann zusätzlich über einen pneumatischen, hydraulischen oder elektrischen Antrieb betätigt werden. Darüber hinaus können an dem Trägerelement Sensoren zur Überwachung und Steuerung des Greifers, Werkzeugs oder Maschinenelements angeordnet sein. Hierzu sind hydraulische, pneumatischen, elektrische oder optische Versorgungsleitungen von der Roboterbasis bis zum Trägerelement geführt. Die Versorgungsleitungen dienen dem Transport von Druckluft, Druckflüssigkeit, elektrischem Strom oder Licht. Licht kann beispielsweise für einen an dem Greifer oder dem Werkzeug angeordneten Sensor notwendig sein. Die Versorgungsleitungen können in einem hohlen Teleskop angeordnet sein, das mit einem Ende beweglich an der Roboterbasis und mit dem anderen Ende beweglich an dem Trägerelement aufgenommen ist. Dieses Teleskop kann entweder ausschließlich der Unterbringung der Versorgungsleitungen dienen oder zusätzlich wie oben beschrieben als Teleskopachse ausgebildet sein.

Ein Industrieroboter mit Parallelkinematik gemäß dem Oberbegriff des Anspruchs 1 ist aus der EP 2 461 948 B1 bekannt. Der Industrieroboter weist mehrere Betätigungseinheiten auf, die mit einem Ende mit einer Roboterbasis und mit dem anderen Ende mit einem Trägerelement beweglich verbunden sind. Ein länglicher Hohlkörper, der als Teleskopachse ausgebildet sein kann, ist mit der Roboterbasis und mit dem Trägerelement beweglich verbunden. An dem Trägerelement ist der Hohlkörper über ein Gelenk mit mehreren Freiheitsgraden beweglich aufgenommen. Das Gelenk und der Hohlkörper weisen jeweils einen Hohlraum auf. Dabei bilden der Hohlraum des Hohlkörpers und der Hohlraum des Gelenks einen durchgängigen Kanal von der Roboterbasis bis zum Trägerelement. In diesem Hohlraum sind Versorgungsleitungen für einen an dem Trägerelement angeordneten Greifer oder für ein an dem Trägerelement angeordnetes Werkzeug angeordnet.

Bekannte Industrieroboter mit Parallelkinematik mit einem zwischen der Roboterbasis und dem Trägerelement angeordneten Teleskop, welches als Teleskopachse ausbildet ist oder der Anordnung von Versorgungsleitungen dient, weisen den Nachteil auf, dass der Bewegungshub des Trägerelements durch das Teleskop eingeschränkt ist, da das Teleskop eine maximale und eine minimale axiale Länge aufweist. Auch wenn die Betätigungseinheiten einen größeres Volumen definieren, innerhalb dem das Trägerelement bewegt werden kann, kann dieses Volumen aufgrund des Teleskops nicht vollständig ausgenutzt werden.

Der Erfindung liegt die Aufgabe zugrunde, einen Industrieroboter mit Parallelkinematik mit einem zwischen der Roboterbasis und dem Trägerelement angeordneten Teleskop, welches als Teleskopachse ausbildet ist oder der Anordnung von Versorgungsleitungen dient, zur Verfügung zu stellen, bei dem das Volumen oder der Raum, innerhalb dem das Trägerelement bewegt werden kann, vergrößert ist.

Diese Aufgabe wird durch einen Industrieroboter mit den Merkmalen des Anspruchs 1 gelöst. Der Industrieroboter zeichnet sich dadurch aus, dass ein erstes mehrere Freiheitsgrade aufweisendes Gelenk, über welches das Teleskop beweglich an der Roboterbasis aufgenommen ist, hinsichtlich seiner Position relativ zur der Roboterbasis verschiebbar angeordnet ist. Das erste Gelenk kann damit seine Position relativ zu der Roboterbasis ändern. Da das Teleskop mit seinem einen Ende an dem ersten Gelenk angeordnet ist, kann auch das entsprechende Ende des Teleskops seine Position relativ zur Roboterbasis ändern. Dies führt dazu, dass sich das Volumen vergrößert, innerhalb dem das andere Ende des Teleskops und das mit dem Teleskop verbundene Trägerelement, bewegt werden können. Das Trägerelement ist über ein zweites Gelenk mit dem Teleskop verbunden, wobei das zweite Gelenk mehrere Freiheitsgrade aufweist.

Das Teleskop weist mindestens zwei Teleskoprohre auf, die verschiebbar ineinander geführt sind. Wenn das Teleskop seine minimale Länge aufweist, sind alle Teleskoprohre ineinander geschoben. Wenn das Teleskop seine maximale Länge aufweist, sind die Teleskoprohre so weit auseinander gezogen, dass sie sich jeweils nur noch in einem Endabschnitt überlappen. Dabei muss der Bereich der Überlappung so groß sein, dass die Stabilität des Teleskops nicht beeinträchtigt ist und ein Knicken des Teleskops vermieden wird.

Das Verschieben des ersten Gelenks relativ zur Roboterbasis erfolgt entlang einer vorgegebenen Achse. Diese Achse kann senkrecht zur Roboterbasis oder unter einem von 90° verschiedenen Winkel gegen die Roboterbasis verlaufen. Die Achse kann auch parallel zur Roboterbasis sein. Dies hängt vom jeweiligen Anwendungsfall ab. Wird die Roboterbasis durch eine Platte gebildet, so entspricht die durch die Roboterbasis vorgegebene Ebene einer der beiden Oberflächen der Platte. Ist die Roboterbasis dagegen durch einen Rahmen oder ein Gestell gebildet, so wird die durch die Roboterbasis vorgegebene Ebene durch die Achsen der Betätigungseinheit-Antriebe definiert.

Das erste Gelenk, welches mehrere Freiheitsgrade aufweist, kann beispielsweise ein Kardangelenk oder ein Gleichlaufgelenk sein. Gleichlaufgelenke werden auch als homokinetische Gelenke bezeichnet.

Nach einer vorteilhaften Ausgestaltung der Erfindung ist an der Roboterbasis ein Linearantrieb angeordnet, der das erste Gelenk hinsichtlich seiner Position relativ zur Roboterbasis bewegt. Der Linearantrieb bewegt das erste Gelenk entlang der oben genannten Achse. Der Linearantrieb kann mit einem Elektromotor ausgestattet sein. Er kann auch mit einem hydraulischen oder pneumatischen Antrieb oder einem sonstigen Aktuator ausgestattet sein.

Nach einer weiteren vorteilhaften Ausgestaltung der Erfindung umfasst der Linearantrieb einen Spindeltrieb.

Nach einer weiteren vorteilhaften Ausgestaltung der Erfindung weist der Spindeltrieb eine Spindel auf. Das erste Gelenk ist mittelbar oder unmittelbar an die Spindel gekoppelt. Die Achse, entlang der das erste Gelenk bewegt wird, entspricht der Längsachse der Spindel, die auch als Spindelachse bezeichnet werden kann.

Nach einer weiteren vorteilhaften Ausgestaltung der Erfindung ist der Linearantrieb an der Roboterbasis auf der dem Trägerelement abgewandten Seite angeordnet. Er beeinträchtigt damit die Betätigungseinheiten nicht. Die Roboterbasis weist eine Durchgangsöffnung auf, durch die die Spindel oder eine an die Spindel gekoppelte Welle hindurchgeführt ist.

Nach einer weiteren vorteilhaften Ausgestaltung der Erfindung ist der Spindeltrieb als Kugelgewindetrieb ausgebildet.

Nach einer weiteren vorteilhaften Ausgestaltung der Erfindung umfasst der Linearantrieb eine verdrehgesicherte Wellenführung.

Nach einer weiteren vorteilhaften Ausgestaltung der Erfindung ist das Teleskop als Teleskopachse ausgebildet. An der Roboterbasis ist ein Hub-Dreh-Modul angeordnet, wobei ein Rotationsantrieb für die Teleskopachse und der Linearantrieb Teile des Hub-Dreh-Moduls sind. Das Hub-Dreh-Modul vereint die Funktion eines Gewindetriebs und einer verdrehgesicherten Wellenführung. Hierzu ist zusätzlich zu einer Gewindetrieb-Mutter an einer Spindel eine Nut-Wellen-Mutter angeordnet. Dabei werden die Gewindetrieb-Mutter und die Nut-Wellen-Mutter über jeweils einen Antrieb zur Rotation angetrieben. Je nachdem ob die Gewindetrieb-Mutter und die Nut-Wellen-Mutter einzeln oder zusammen angetrieben werden, kann die Spindel zu einer linearen, einer rotatorischen oder einer spiralförmigen Bewegung angetrieben werden. Dies führt dazu, dass das Hub-Dreh-Modul das erste Gelenk und die daran angebundene Teleskopachse zur Rotation, zur Translation oder zu einer Überlagerung aus Translation und Rotation antreiben kann. Sind die Gewindetrieb-Mutter und die Nut-Wellen-Mutter mit Kugeln ausgestattet, so ist eine spielfreie, positionsgenaue und reibungsarme Bewegung ermöglicht.

Nach einer weiteren vorteilhaften Ausgestaltung der Erfindung ist die Roboterbasis mit einer Linearführung mit einem Führungskörper ausgestattet. Das erste Gelenk ist an den Führungskörper mittelbar oder unmittelbar gekoppelt. Die Betätigungseinheiten üben auf das Trägerelement eine Kraft aus. Diese Kraft wird über das zweite Gelenk und das Teleskop auf das erste Gelenk übertragen. Dabei wird auf das erste Gelenk ein Zug oder ein Druck ausgeübt. Aufgrund der Linearführung kann das erste Gelenk entsprechend diesem Zug oder Druck seine Position relativ zur Roboterbasis verändern. Auf einen zusätzlichen Linearantrieb wird in diesem Fall verzichtet.

Nach einer weiteren vorteilhaften Ausgestaltung der Erfindung ist die Linearführung als Gleitführung oder Wälzführung, als Wellen oder Schienenführung ausgebildet.

Nach einer weiteren vorteilhaften Ausgestaltung der Erfindung ist das erste Gelenk ein Kardangelenk.

Nach einer weiteren vorteilhaften Ausgestaltung der Erfindung ist das erste Gelenk ein Gleichlaufgelenk.

Nach einer weiteren vorteilhaften Ausgestaltung der Erfindung ist das zweite Gelenk ein Kardangelenk.

Nach einer weiteren vorteilhaften Ausgestaltung der Erfindung ist das zweite Gelenk ein Gleichlaufgelenk.

Weitere Vorteile und vorteilhafte Ausgestaltungen der Erfindung sind der nachfolgenden Beschreibung, der Zeichnung und den Ansprüche entnehmbar.

### Zeichnung

In der Zeichnung ist ein Ausführungsbeispiel der Erfindung dargestellt und im folgenden näher beschrieben. Es zeigen:
- Figur 1: Ausführungsbeispiel eines Industrieroboters mit Parallelkinematik in perspektivischer Ansicht,
- Figur 2: Schnitt durch den Industrieroboter gemäß Figur 1 in perspektivischer Ansicht von oben, wobei der in Figur 4 dargestellte Ausschnitt mit einem Kreis und mit z gekennzeichnet ist,
- Figur 3: Ausschnitt aus Figur 2,
- Figur 4: Industrieroboter gemäß Figur 1 mit ausgefahrenem Teleskop in einer Schnittdarstellung,
- Figur 5: Industrieroboter gemäß Figur 1 mit ausgefahrenem Teleskop und ausgefahrener Spindel in einer Schnittdarstellung.

### Beschreibung des Ausführungsbeispiels

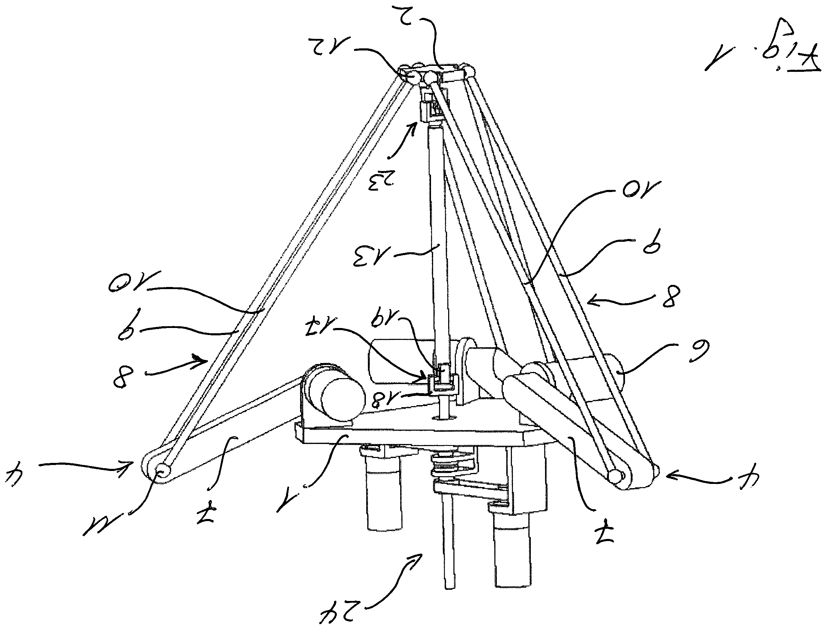

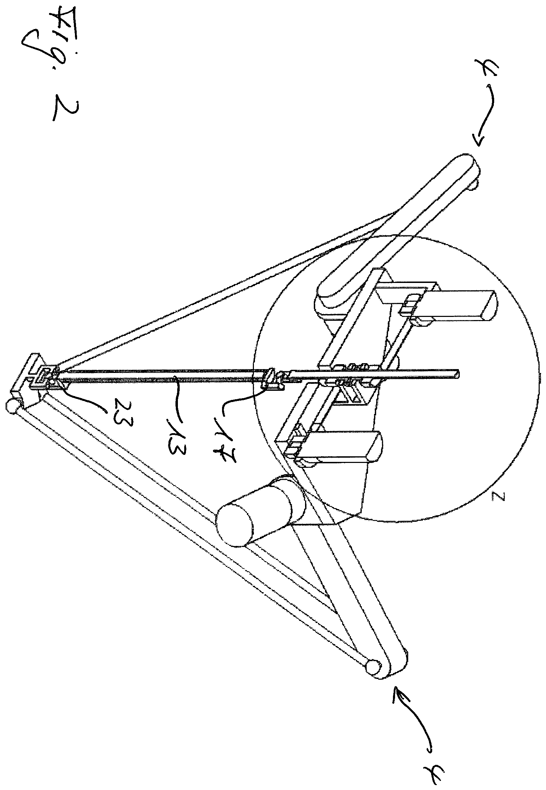

In den Figuren 1 bis 5 ist ein Ausführungsbeispiel eines Industrieroboters mit Parallelkinematik nach dem Delta-Prinzip mit einer Roboterbasis 1, einem Trägerelement 2, an welchem ein Greifer, ein Werkzeug oder ein Maschinenelement angeordnet werden kann, und drei als Steuerarme ausgebildete Betätigungseinheiten 4 dargestellt. Ein Greifer, ein Werkzeug oder ein Maschinenelement sind in der Zeichnung nicht gezeigt. Jeder der drei Betätigungseinheiten ist über eine in der Zeichnung nicht erkennbare Antriebswelle mit einem als Motor ausgebildeten Betätigungseinheit-Antrieb 6 verbunden. Die Betätigungseinheit-Antriebe erzeugen ein Drehmoment. Alle drei Betätigungseinheiten 4 sind gleich aufgebaut. Die Betätigungseinheiten 4 weisen einen oberen Armabschnitt 7 und einem unteren Armabschnitt 8 auf. Dabei zeichnet sich der obere Armabschnitt 7 durch eine hohe Stabilität und ein geringes Gewicht aus. Jeder Betätigungseinheit-Antrieb 6 überträgt ein Drehmoment auf den mit ihm verbundenen oberen Armabschnitt 7. Der untere Armabschnitt 8 weist zwei parallel verlaufende Stangen 9 und 10 auf. Die beiden Stangen 9 und 10 des unteren Armabschnitts 8 einer Betätigungseinheit 4 sind über Gelenke 11 an ihrem oberen Ende mit dem oberen Armabschnitt 7 der Betätigungseinheit 4 und über Gelenke 12 mit dem Trägerelement 2 verbunden.

Der Industrieroboter ist ferner mit einem Teleskop 13 ausgestattet. Es dient dazu, ein Drehmoment auf einen in der Zeichnung nicht dargestellten Greifer oder ein nicht dargestelltes Werkzeug oder Maschinenelement an dem Trägerelement 2 zu übertragen. Das Teleskop 13 ist somit als Teleskopachse ausgebildet. Das Teleskop 13 weist zwei ineinander verschiebbare Teleskoprohre auf: ein inneres Teleskoprohr 15 und ein äußeres Teleskoprohr 16. Durch die verschiebbare Lagerung können Abstandsänderungen zwischen der Roboterbasis 1 und dem Trägerelement 2 bei einer Bewegung der Betätigungseinheiten 4 ausgeglichen werden. Das äußere Teleskoprohr 16 ist über ein erstes Gelenk 17 mit mehreren Freiheitsgraden beweglich mit der Roboterbasis 1 verbunden. Das erste Gelenk 17 ist als Kardangelenk ausgebildet und weist zwei als Gelenkgabeln ausgebildete Gelenkteile 18 und 19 auf, welche um senkrecht zueinander verlaufende Achsen drehbar angeordnet sind. Ein derartiges Gelenk wird auch als Kreuzgelenk bezeichnet.

Über ein zweites Gelenk 23 mit mehreren Freiheitsgraden ist das innere Teleskoprohr 15 des Teleskops 13 beweglich mit dem Trägerelement 2 verbunden. Das zweite Gelenk ist ebenfalls als Kardangelenk ausgebildet. Durch die beiden Gelenke 17, 23 kann das Teleskop 13 einer Auslenkung des Trägerelements 2 relativ zur Roboterbasis 1 folgen.

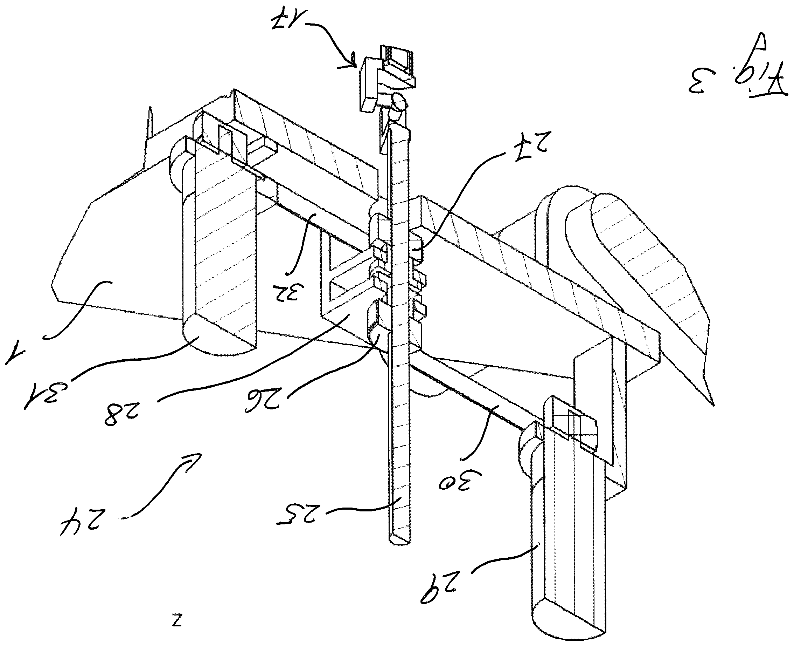

An der Roboterbasis 1 ist ein Hub-Dreh-Modul 24 angeordnet. Dies ist besonders gut in Figur 3 erkennbar. Das Hub-Dreh-Modul 24 umfasst eine Spindel 25, eine Kugelgewindetrieb-Mutter 26, eine Nut-Wellen-Mutter 27, eine Halterung 28 für die Kugelgewindetrieb-Mutter 26 und die Nut-Wellen-Mutter 27, einen Antrieb 29 für die Kugelgewindetrieb-Mutter 26 mit Antriebsriemen 30 und einen Antrieb 31 für die Nut-Wellen-Mutter 27 mit einem Antriebsriemen 32. Die Halterung 28 und die beiden Antriebe 29, 31 sind ortsfest an der Roboterbasis 1 angeordnet. Das erste Gelenk 17 ist an einem Ende der Spindel 25 angeordnet.

Die Kugelgewindertrieb-Mutter 26 und die Nut-Wellen-Mutter 27 weisen jeweils eine umfangsseitig verlaufende Nut auf, in die die Halterung 28 eingreift. Dies führt dazu, dass die zur Rotation durch die Antriebe 29, 31 einzeln oder gemeinsam angetriebene Kugelgewindetrieb-Mutter 26 und Nut-Wellen-Mutter 27 ihre Position relativ zur Roboterbasis 1 nicht verändern.

Wird nur die Kugelgewindetrieb-Mutter 26 zur Rotation angetrieben und die Nut-Wellen-Mutter 27 nicht, so wird die Spindel 25 linear entlang ihrer Längsachse bewegt. Von der Drehrichtung der Kugelgewindetrieb-Mutter 26 hängt die Bewegungsrichtung der Spindel 25 ab.

Wird nur die Nut-Wellen-Mutter 27 zur Rotation angetrieben und die Kugelgewindetrieb-Mutter 26 nicht, so führt die Spindel 25 eine spiralförmige Bewegung durch, die sich aus einer Translation entlang ihrer Längs- oder Spindelachse und einer Rotationsbewegung um ihre Längs- oder Spindelachse zusammensetzt. Die Bewegungsrichtung der Spindel hängt von der Drehrichtung der Nut-Wellen-Mutter 27 ab.

Werden die Kugelgewindetrieb-Mutter 26 und die Nut-Wellen-Mutter 27 durch ihre Antriebe 29, 31 zur Rotation angetrieben, so führt die Spindel 25 eine Rotationsbewegung um ihre Längs- oder Spindelachse durch. Die Drehrichtung der Spindel 25 hängt von den Drehrichtungen der Kugelgewindetrieb-Mutter 26 und der Nut-Wellen-Mutter 27 ab.

Die Bewegung der Spindel 25 wird auf das erste Gelenk 17 und das Teleskop 13 übertragen.

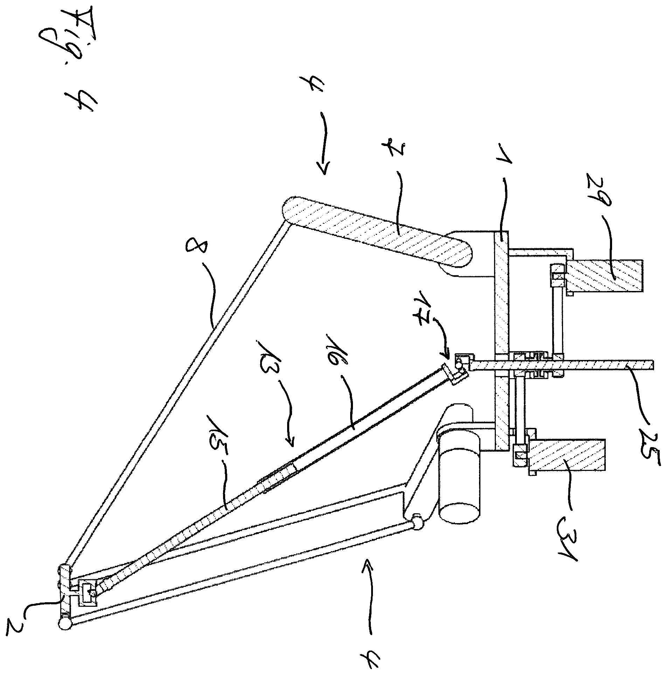

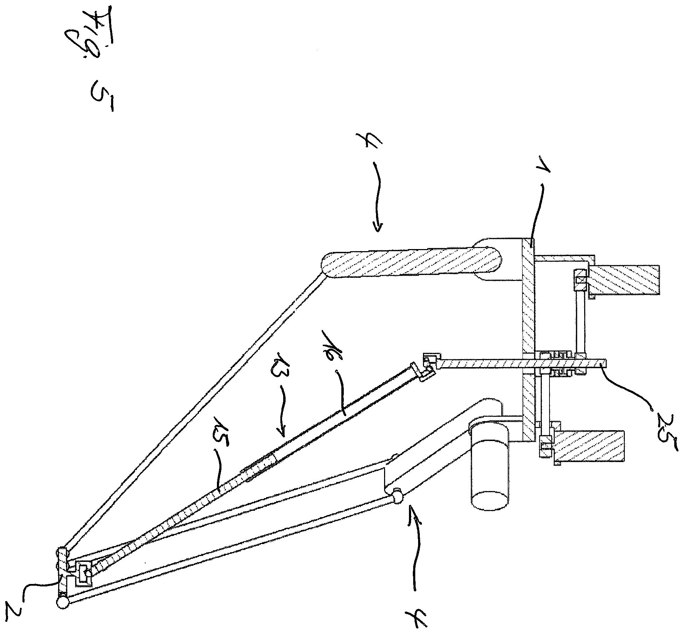

Die Figuren 4 und 5 zeigen das Teleskop 13 jeweils in maximaler Länge. Dabei ist das innere Teleskoprohr 15 bis auf einen Endabschnitt aus dem äußeren Teleskoprohr 16 herausgezogen. Der Unterschied zwischen Figur 4 und 5 besteht in der Position der Spindel 25 und des ersten Gelenks 17. In Figur 5 ist die Spindel 25 gegenüber der Stellung in Figur 4 nach unten bewegt. Dadurch ist der Abstand zwischen dem ersten Gelenk 17 und der Roboterbasis 1 in Figur 5 größer als in Figur 4. Als Folge davon können die Betätigungseinheiten 4 das Trägerelement 2 weiter nach unten bewegen.

Sämtliche Merkmale der Erfindung können sowohl einzeln als auch in beliebiger Kombination miteinander erfindungswesentlich sein.

### Bezugszahlen

- 1: Roboterbasis
- 2: Trägerelement
- 3:
- 4: Betätigungseinheit
- 5:
- 6: Betätigungseinheit-Antrieb
- 7: oberer Armabschnitt
- 8: unterer Armabschnitt
- 9: Stange
- 10: Stange
- 11: Gelenk
- 12: Gelenk
- 13: Teleskop
- 14:
- 15: inneres Teleskoprohr
- 16: äußeres Teleskoprohr
- 17: erstes Gelenk mit mehreren Freiheitsgraden
- 18: Gelenkgabel
- 19: Gelenkgabel
- 20:
- 21:
- 22:
- 23: zweites Gelenk mit mehreren Freiheitsgraden
- 24: Hub-Dreh-Modul
- 25: Spindel
- 26: Kugelgewindetrieb-Mutter
- 27: Nut-Wellen-Mutter
- 28: Halterung
- 29: Antrieb der Kugelgewindetrieb-Mutter
- 30: Antriebsriemen
- 31: Antrieb der Nut-Wellen-Mutter
- 32: Antriebsriemen

## Patentansprüche

1. Industrieroboter mit Parallelkinematik
mit einer Roboterbasis (1),
mit einem Trägerelement (2) zur Aufnahme eines Greifers, eines Werkzeugs oder eines Maschinenelements,
mit mindestens zwei beweglichen Betätigungseinheiten (4), die mit ihrem einen Ende mit an der Roboterbasis (1) angeordneten Betätigungseinheit-Antrieben (6) verbunden sind, und deren anderes Ende mit dem Trägerelement (2) beweglich verbunden ist,
mit einem zwischen der Roboterbasis (1) und dem Trägerelement (2) beweglich angeordneten Teleskop (13), welches als Teleskopachse ausgebildet ist und/ oder als Hohlkörper ausgebildet ist, wobei der Hohlkörper Versorgungsleitungen für einen an der Roboterbasis angeordneten Greifer, ein Werkzeug oder ein Maschinenelement aufnimmt und diese von der Roboterbasis (1) bis zum Trägerelement (2) führt,
mit einem ersten mehrere Freiheitsgrade aufweisenden Gelenk (17), über welches das Teleskop (13) beweglich an der Roboterbasis (1) aufgenommen ist,
mit einem zweiten mehrere Freiheitsgrade aufweisenden Gelenk (23), über welches das Teleskop (13) beweglich an dem Trägerelement (2) aufgenommen ist,
**dadurch gekennzeichnet,**
**dass** das erste Gelenk (17) hinsichtlich seiner Position relativ zur Roboterbasis (1) verschiebbar angeordnet ist.

2. Industrieroboter nach Anspruch 1, **dadurch gekennzeichnet, dass** an der Roboterbasis (1) ein Linearantrieb angeordnet ist, der das erste Gelenk (17) hinsichtlich seiner Position relativ zur Roboterbasis (1) bewegt.

3. Industrieroboter nach Anspruch 2, **dadurch gekennzeichnet, dass** der Linearantrieb einen Spindeltrieb (24) umfasst.

4. Industrieroboter nach Anspruch 3, **dadurch gekennzeichnet, dass** der Spindeltrieb (24) eine Spindel (25) aufweist, und dass das erste Gelenk (17) mittelbar oder unmittelbar an die Spindel (25) gekoppelt ist.

5. Industrieroboter nach Anspruch 4, **dadurch gekennzeichnet, dass** der Linearantrieb an der Roboterbasis (1) auf der dem Trägerelement (2) abgewandten Seite angeordnet ist, dass die Roboterbasis (1) eine Durchgangsöffnung aufweist, durch die die Spindel (25) oder eine an die Spindel gekoppelte Welle hindurchgeführt ist.

6. Industrieroboter nach Anspruch 3, 4 oder 5, **dadurch gekennzeichnet, dass** der Spindeltrieb (24) als Kugelgewindetrieb ausgebildet ist.

7. Industrieroboter nach einem der Ansprüche 2 bis 6, **dadurch gekennzeichnet, dass** der Linearantrieb eine verdrehgesicherte Wellenführung umfasst.

8. Industrieroboter nach einem der Ansprüche 1 bis 7, **dadurch gekennzeichnet, dass** das Teleskop (13) als Teleskopachse ausgebildet ist, und dass an der Roboterbasis (1) ein Hub-Dreh-Modul (24) angeordnet ist.

9. Industrieroboter nach Anspruch 1, **dadurch gekennzeichnet, dass** die Roboterbasis (1) mit einer Linearführung mit einem Führungskörper ausgestattet ist, und dass das erste Gelenk (17) an den Führungskörper mittelbar oder unmittelbar gekoppelt ist.

10. Industrieroboter nach Anspruch 9, **dadurch gekennzeichnet, dass** die Linearführung als Gleitführung oder Wälzführung ausgebildet ist.

11. Industrieroboter nach einem der vorhergehenden Ansprüche, **dadurch gekennzeichnet, dass** das erste Gelenk (17) ein Kardangelenk ist.

12. Industrieroboter nach einem der Ansprüche 1 bis 10, **dadurch gekennzeichnet, dass** der erste Gelenk ein Gleichlaufgelenk ist.

13. Industrieroboter nach einem der vorhergehenden Ansprüche **dadurch gekennzeichnet, dass** das zweite Gelenk (23) ein Kardangelenk ist.

## Claims

1. Industrial robot with parallel kinematics
with a robot base (1),
with a carrier element (2) for holding a gripper, a tool or a machine element,
with at least two moveable actuating units (4) that are connected at one end to actuating unit drives (6) arranged on the robot base (1) and that are moveably connected at the other end to the carrier element (2),
with a telescope (13) that is moveably arranged between the robot base (1) and the carrier element (2) and takes the form of a telescopic axis and/or the form of a hollow body, whereby the hollow body receives supply lines for a gripper, tool or machine element arranged on the robot base and leads these supply lines from the robot base (1) to the carrier element (2),
with a first joint (17) having multiple degrees of freedom by means of which the telescope (13) is moveably received in the robot base (1),
with a second joint (23) having multiple degrees of freedom by means of which the telescope (13) is moveably received in the carrier element (2),
**characterised in that**
the first joint (17) is displaceably arranged in respect of its position relative to the robot base (1).

2. Industrial robot according to claim 1, **characterised in that** a linear drive that moves the first joint (17) in respect of its position relative to the robot base (1) is arranged on the robot base (1).

3. Industrial robot according to claim 2, **characterised in that** the linear drive comprises a spindle drive (24).

4. Industrial robot according to claim 3, **characterised in that** the spindle drive (24) comprises a spindle (25) and that the first joint (17) is directly or indirectly linked to the spindle (25).

5. Industrial robot according to claim 4, **characterised in that** the linear drive is arranged on the side of the robot base (1) that faces away from the carrier element (2) and that the robot base (1) comprises a through opening through which the spindle (25) or a shaft linked to the spindle is guided.

6. Industrial robot according to claim 3, 4 or 5, **characterised in that** the spindle drive (24) takes the form of a ball screw drive.

7. Industrial robot according to one of claims 2 to 6, **characterised in that** the linear drive comprises a positively locked shaft arrangement.

8. Industrial robot according to one of claims 1 to 7, **characterised in that** the telescope (13) takes the form of a telescopic axis and that a ball screw spline (24) is arranged on the robot base (1).

9. Industrial robot according to claim 1, **characterised in that** the robot base (1) is equipped with a linear guide having a guide body and that the first joint (17) is directly or indirectly linked to the guide body.

10. Industrial robot according to claim 9, **characterised in that** the linear guide takes the form of a slideway or rolling guideway.

11. Industrial robot according to one of the previous claims, **characterised in that** the first joint (17) is a cardan joint.

12. Industrial robot according to one of claims 1 to 10, **characterised in that** the first joint is a constant-velocity joint.

13. Industrial robot according to one of the previous claims, **characterised in that** the second joint (23) is a cardan joint.

## Revendications

1. Robot industriel à cinématique parallèle
comprenant une base (1),
un élément porteur (2) pour recevoir une pince, un outil ou un élément de la machine,
au moins deux unités d'actionnement (4) mobiles, qui sont reliées par une de leurs extrémités aux entraînements (6) disposés sur la base (1) et par l'autre extrémité à l'élément porteur (2) de façon mobile,
un élément télescopique (13) mobile, situé entre la base (1) et l'élément porteur (2), conçu comme axe télescopique et/ou comme corps creux, celui-ci réceptionnant les conduites d'alimentation pour une pince montée sur la base, un outil ou un élément de machine, et les conduisant de la base (1) à l'élément porteur (2),
une première articulation (17) à plusieurs degrés de liberté, à travers laquelle l'élément télescopique (13) est monté de façon mobile sur la base (1),
une deuxième articulation (23) à plusieurs degrés de liberté, à travers laquelle l'élément télescopique (13) est monté de façon mobile sur l'élément porteur (2),
**caractérisé en ce que**
la position de la première articulation (17) est coulissable par rapport à la base (1).

2. Robot industriel selon la revendication 1, **caractérisé par le fait que** la base (1) comporte un entraînement linéaire déplaçant la position de la première articulation (17) par rapport à la base (1).

3. Robot industriel selon la revendication 2, **caractérisé par le fait que** l'entraînement linéaire englobe un entraînement à broche (24).

4. Robot industriel selon la revendication 3, **caractérisé par le fait que** l'entraînement à broche (24) comprend une broche (25), et que la première articulation (17) est directement ou indirectement reliée à cette broche (25).

5. Robot industriel selon la revendication 4, **caractérisé par le fait que** l'entraînement linéaire monté sur la base (1) se trouve sur la face opposée à l'élément porteur (2), que la base (1) est pourvue d'un orifice à travers lequel passe la broche (25) ou un arbre raccordé à la broche.

6. Robot industriel selon la revendication 3, 4 ou 5, **caractérisé par le fait que** l'entraînement à broche (24) est conçu comme vis d'entraînement à bille.

7. Robot industriel selon l'une des revendications 2 à 6, **caractérisé par le fait que** l'entraînement linéaire englobe un guidage d'arbre à sécurité antirotation.

8. Robot industriel selon l'une des revendications 1 à 7, **caractérisé par le fait que** l'élément télescopique (13) est conçu comme axe télescopique et qu'un module élévateur pivotant (24) se trouve sur la base (1).

9. Robot industriel selon la revendication 1, **caractérisé par le fait que** la base (1) comporte un guidage linéaire avec un corps de guidage et que la première articulation (17) est raccordée directement ou indirectement à ce corps.

10. Robot industriel selon la revendication 9, **caractérisé par le fait que** le guidage linéaire constitue un guidage lisse ou un guidage à rouleaux.

11. Robot industriel selon l'une des revendications mentionnées plus haut, **caractérisé par le fait que** la première articulation (17) est un joint à cardan.

12. Robot industriel selon l'une des revendications 1 à 10, **caractérisé par le fait que** la première articulation est un joint homocinétique.

13. Robot industriel selon l'une des revendications mentionnées plus haut, **caractérisé par le fait que** la deuxième articulation (23) est un joint à cardan.
